# EUROPEAN PATENT SPECIFICATION

(11) **EP 3 741 488 B1**
(45) Date of publication and mention of the grant of the patent: **20.12.2023**
(21) Application number: 20169608.5
(22) Date of filing: 15.04.2020
(51) Int. Cl.: B23K 9/00, B23K 9/095, B23K 9/10, B23K 31/12

(54) **USE OF MOBILE COMMUNICATION DEVICES AS USER INTERFACE FOR WELDING EQUIPMENT AND SYSTEMS**
VERWENDUNG VON MOBILEN KOMMUNIKATIONSVORRICHTUNGEN ALS BENUTZERSCHNITTSTELLE FÜR SCHWEISSGERÄTE UND -SYSTEME
UTILISATION DE DISPOSITIFS DE COMMUNICATION MOBILES EN TANT QU'INTERFACE UTILISATEUR POUR ÉQUIPEMENT ET SYSTÈMES DE SOUDAGE

(30) Priority: 15.04.2019 US 201916383764
(43) Date of publication of application: 25.11.2020
(73) Proprietor: Lincoln Global, Inc., Santa Fe Springs, CA 90670 (US)
(72) Inventor: Petrila, Lucian, Cuyahoga Falls, OH 44223 (US); Chantry, Bruce John, Solon, OH 44139 (US); Mathews, William T., Chesterland, OH 44026 (US); Daniel, Joseph A., Sagamore Hills, OH 44067 (US)
(74) Representative: Grosse Schumacher Knauer von Hirschhausen

(56) References cited:
- EP-A1- 3 318 360
- WO-A1-2019/213230
- US-A1- 2013 112 673

## Description

### FIELD OF THE INVENTION

The present invention relates to the use of various communication devices as a user interface for welding equipment and systems and more specifically to a welding or cutting system according to the preamble of claim 1.

### BACKGROUND OF INVENTION

As welding technology has advanced, welding power supplies and associated components have become extremely complex in their operation and control circuitry. Although this complexity has enhanced the versatility of welding equipment, it has also significantly increased the costs of welding equipment. Furthermore, not only have the costs of the equipment been increased, but advanced welding equipment has also become more complicated to interface and program. The object of the invention is therefore to provide an improved welding or cutting system.

EP 3 318 360 A1 discloses a welding or cutting system and forms the basis of the preamble of claim 1.

### SUMMARY OF THE INVENTION

A welding or cutting system having a power supply which requires the input of at least one operational parameter to perform a desired operation, and a mobile communication device having a user input application installed thereon which allows a user to input the operational parameter into the mobile communication device. The mobile communication device communicates the operational parameter to the power supply, and the power supply does not have a user input interface such that the operational parameter cannot be input into the power supply without the mobile communication device.

In one embodiment, a welding or cutting system is provided. The welding or cutting system includes a welding or cutting power supply to respectively perform welding or cutting operations. The welding or cutting system also includes a mobile communication device having a camera, a display, and a motion sensor device. The mobile communication device includes a mobile communication programming application and a welding or cutting programming application installed thereon. The welding or cutting programming application is programmed to generate displayed imagery of an object of a welding or cutting environment and make a measurement of the object, using the camera and the display and the motion sensor device, at least in part by overlaying augmented reality imagery onto the displayed imagery of the object as a user positions the mobile communication device with respect to the object. The welding or cutting programming application is also programmed to correlate the measurement to one or more welding or cutting operational parameters. The welding or cutting programming application is further programmed to facilitate communication of the one or more welding or cutting operational parameters from the mobile communication device to the welding or cutting power supply, where the one or more welding or cutting operational parameters are for use by the welding or cutting power supply to control a welding or cutting operation of the welding or cutting operations. In one embodiment, the mobile communication device is a third party communication device. In one embodiment, the mobile communication device includes one of a smartphone, a computer tablet, or a computer laptop. In one embodiment, the object is a workpiece to be welded or cut and the measurement corresponds to a thickness of the workpiece. In one embodiment, the object is a consumable welding wire and the measurement corresponds to a diameter of the consumable welding wire. In one embodiment, the object is a welding groove between two workpieces to be welded together and the measurement corresponds to a width or depth of the welding groove. In one embodiment, the mobile communication device has a security key which is transmitted to the welding or cutting power supply prior to operation of the welding or cutting power supply. The welding or cutting power supply will not operate unless the security key is determined to be an authorized security key by the welding or cutting power supply. In one embodiment, the mobile communication device operates the welding or cutting power supply from a remote location via a wireless connection. In one embodiment, the mobile communication device stores identification information of the welding or cutting power supply and uses the identification information to control the operation of the welding or cutting power supply.

In one embodiment, a welding or cutting system is provided. The welding or cutting system includes a welding or cutting power supply to respectively perform welding or cutting operations. The welding or cutting system also includes a mobile communication device having a camera. The mobile communication device includes a mobile communication programming application and a welding or cutting programming application installed thereon. The welding or cutting programming application is programmed to acquire one or more images of a welding or cutting environment via the camera, analyze the one or more images to generate analysis results, and correlate the analysis results to one or more welding or cutting operational parameters. The welding or cutting programming application is also programmed to facilitate communication of the one or more welding or cutting operational parameters from the mobile communication device to the welding or cutting power supply. The one or more welding or cutting operational parameters are for use by the welding or cutting power supply to control a welding or cutting operation of the welding or cutting operations. In one embodiment, the mobile communication device is a third party communication device. In one embodiment, the mobile communication device includes one of a smartphone, a computer tablet, or a computer laptop. In one embodiment, an analysis of the one or more acquired images includes one or more of performing image processing, determining relational distance measurements, determining angular measurements, determining a type of material to be welded or cut in the welding or cutting environment, and determining a type of welding or cutting equipment present in the welding or cutting environment. In one embodiment, the mobile communication device has a security key which is transmitted to the welding or cutting power supply prior to operation of the welding or cutting power supply, and wherein the welding or cutting power supply will not operate unless the security key is determined to be an authorized security key by the welding or cutting power supply. In one embodiment, the mobile communication device operates the welding or cutting power supply from a remote location via a wireless connection. In one embodiment, the mobile communication device stores identification information of the welding or cutting power supply and uses the identification information to control the operation of the welding or cutting power supply.

In one embodiment, a welding or cutting system is provided. The welding or cutting system includes a welding or cutting power supply to respectively perform welding or cutting operations. The welding or cutting system also includes a mobile communication device having a camera, a display, and a motion sensor device, wherein the mobile communication device includes a mobile communication programming application and a maintenance/service augmented reality application installed thereon, the maintenance/service augmented reality application is programmed to acquire and display real-time imagery of a portion of a welding or cutting environment via the camera and display of the mobile communication device, recognize elements of the portion of the welding or cutting environment being displayed, and overlay augmented information on the real-time imagery of the portion of the welding or cutting environment, based on the elements as recognized, to aid a user in maintaining or servicing the portion of the welding or cutting environment. In one embodiment, the mobile communication device is a third party communication device. In one embodiment, the mobile communication device includes one of a smartphone, a computer tablet, or a computer laptop. In one embodiment, the augmented information includes at least one of computer generated text, numbers, or graphics.

### BRIEF DESCRIPTION OF DRAWINGS

The above and/or other aspects, features and embodiments of the invention will be more apparent from the ensuring description, drawings and claims, and by describing in detail exemplary embodiments of the invention with reference to the accompanying drawings, in which:
FIG. 1 is a diagrammatical representation of an exemplary embodiment of a welding system of the present invention;
FIG. 2 is a diagrammatical representation of a further exemplary embodiment of a welding system of the present invention;
FIG. 3 is a diagrammatical representation of an additional exemplary embodiment of a welding system of the present invention;
FIG. 4 is a diagrammatical representation of an exemplary embodiment of a welding power supply and system of the present invention;
FIG. 5 is a diagrammatical representation of a communication device used in exemplary embodiments of the present invention;
FIG. 6 is a diagrammatical representation of the communication device showing additional data;
FIG. 7 is a diagrammatical representation of a welding/cutting power supply in accordance with an embodiment of the present invention;
FIG. 8A illustrates an example embodiment of a first type of graphical user interface corresponding to manufacturer "A", and FIG. 8B illustrates an example embodiment of a second type of graphical user interface corresponding to manufacturer "B";
FIG. 9A and FIG. 9B illustrate one embodiment of a mobile communication device having a camera, a display, and a motion sensor device;
FIG. 10 illustrates a flowchart of an example not being part of the claimed invention of a method performed by a mobile communication device providing an augmented reality measurement capability to automatically select appropriate operational parameters for a welding or cutting operation;
FIG. 11 illustrates a flowchart of an example not being part of the claimed invention of a method 1100 performed by a mobile communication device providing an image analysis capability to automatically select appropriate operational parameters for a welding or cutting operation;
FIG. 12 illustrates one embodiment of a mobile communication device displaying imagery including overlaid augmented reality elements; and
FIG. 13 illustrates a flowchart of an example not being part of the claimed invention of a method to support maintenance/service of welding or cutting equipment of a welding or cutting environment using a mobile communication device.

### DETAILED DESCRIPTION OF EXEMPLARY EMBODIMENTS

Referring now to the drawings wherein the showings are for the purpose of illustrating exemplary embodiments of the invention only and not for the purpose of limiting the same, a system used in practicing the invention is shown in detail in the drawings and described herein.

As stated previously, the advancements in technology of current welding equipment has greatly increased its versatility and application usage. With this increase in versatility, it has been necessary to develop both hardware and software for the user interface of the welding equipment that permits a user to be able to use the full capabilities of the welding equipment. However, the development and implementation of this user interface hardware and software is resource intensive and time consuming. It also requires the welding equipment to contain sophisticated electronics and control circuitry because the user interface systems and components are located on the welding equipment itself. For example, a welding power supply typically has a user interface panel which allows the user to input various welding parameters as well as monitor some aspects of the welding operation. Welding equipment can have input controls for welding parameters such as: wire feed speed, voltage, current, etc., and can similarly have data display screens, etc. Furthermore, welding power supplies often contain hardware and software to allow the power supply to communicate with other welding equipment, such as wire feeders. For example, a welding power supply may have software and hardware that permits the power supply to communicate a wire feed speed setting to a wire feeder. Additionally all user input controls on a power supply, such as a welding or cutting power supply, must be sufficiently shielded to separate a user from the potentially dangerous electrical currents within the power supply - this isolation adds additional cost and complexity to the power supply.

Furthermore, because of the complexity of welding equipment, it is difficult to train the end users of the equipment or to customize or program the equipment for a particular custom welding operation. Therefore, it is desirable to reduce the cost and complexity of operating modern welding equipment.

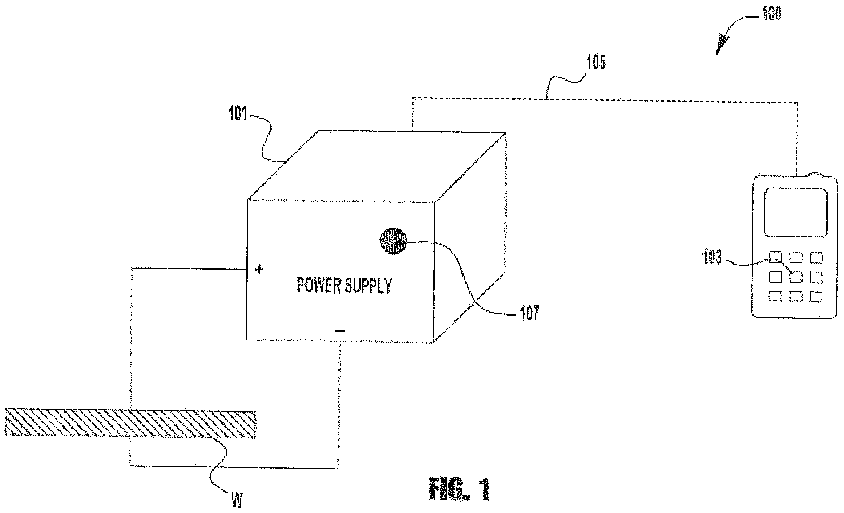

Figures 1 through 4 depict various embodiments of a welding system in accordance with exemplary embodiments of the present invention. Each figure will be discussed in turn.

Figure 1 shows a welding system 100 having a mobile communication device 103 and a power supply 101, which is used to weld or cut a workpiece W. The power supply can be any type of welding or cutting power supply, and can be constructed for any known type of welding or cutting operation. For example, the power supply can be a plasma cutting or welding power supply, including but not limited to a GMAW, MIG, TIG, GTAW, SAW, FCAW, etc. type power supply. As an example, the power supply can be a Power Wave^{®} power supply manufactured by The Lincoln Electric Co. of Cleveland, Ohio, or any similar type of welding or cutting power supply. The mobile communication device 103 can be any known or commercially available mobile communication device having sufficient communication and computational capabilities to act as a user interface for the power supply 101. For example, the communication device 103 can be a smartphone, computer tablet or laptop, or similar type of a communication device. In some exemplary embodiments of the present invention, the mobile communication device is a third party communication device. A third party communication device is a commercially available, "off-the-shelf," communication device which is manufactured and sold by a party separate and discrete from the manufacturer of the power supply 103. For example, the mobile device can be a communication device from Apple, Inc., Motorola, Samsung, Nokia, Dell, IBM, RIM, or similar manufacturer. In other exemplary embodiments of the present invention, the communication device is a custom designed and manufactured device specific to the power supply and/or the manufacturer of the power supply. For example, the mobile communication device can be a communication pendant. The communication device is capable of communicating with other devices - such as the power supply - wirelessly (for example, using cellular, Bluetooth, or any other type of wireless connection, such as IEEE 802.11 compliant wireless communications) or via a wired connection (such as a USB type connection) 105. Further, the mobile communication device 103 and the power supply 101 (and other components controlled by the device 103) can operate in/communicate via any type of network. For example, the components of the system 100 can communicate via a cellular, public wireless, private wireless communication network. Further, the components of the system can communicate via an internet based communication network. Examples of such communication methods and systems are described in U.S. Patent Nos. 7,245,875 entitled "System and Method to Facilitate Wireless Communication in a Welding Environment" and 7,574,172 entitled "System and Method to Facilitate Wireless Wide Area Communication in a Welding Environment,".

Because of the user interface capabilities of the communication device 103, the power supply 101 does not have a user interface or any type of user input controls. That is, the power supply 101, or whatever welding or cutting equipment being controlled, does not have any user interface control or data entry hardware or software. Stated differently, absent the use of the mobile device 103, a user will be unable to input data or otherwise use the power supply 101 for its intended purpose. Rather, the mobile device 103 contains a data and user input application which allows the user to input whatever operational data and parameters are needed to control the power supply 101 to control the operation of the power supply 101. Further, in some exemplary embodiments of the present invention the mobile device 103 also has an application which permits the mobile device to display information regarding the operation of the power supply 101, including real time feedback, weld completion status, power status, etc. Specifically, the system 100 is capable of displaying real time feedback regarding the status of the welding or cutting operation, including but not limited to current, voltage, power, wire feed speed, gas flow rate, weld deposition rate, welding time, or any other parameters desired to be monitored.

Because the creation and implementation of applications on various mobile devices, such as smartphones and tablets, are known they will not be discussed or described in detail herein. The ability to create, install and implement such applications on mobile devices is well within the level of skill of those in the mobile communication, programming and/or welding programming industries.

In another exemplary embodiment of the present invention, the power supply does have a single user control, which is an on/off control switch 107. In such an embodiment the switch 107 is only used to turn on the main power to the power supply 101. However, in other exemplary embodiments, the power supply 101 has no such switch 107 as this function is controlled by the mobile device 103.

By removing the user input capabilities of the power supply 101 the operation complexity and cost of the power supply is significantly reduced. Furthermore, aspects of the present invention allow the power supply 101 to be controlled from remote locations, should that be desired or needed. Thus, it is not necessary that the user be positioned at or near the power supply to start or operate the welding or cutting operation.

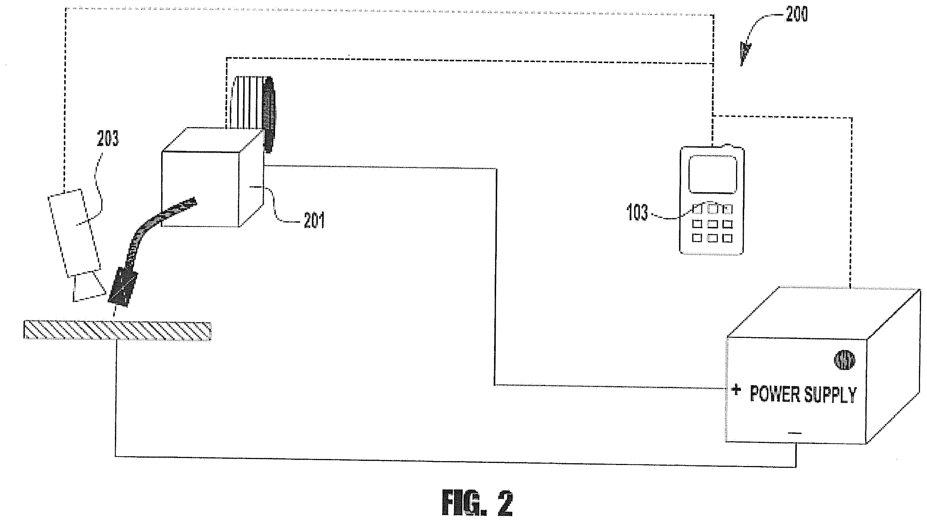

Figure 2 depicts another exemplary embodiment of a welding system 200 in accordance with the present invention. However, in this welding system the mobile device also controls the operation of a wire feeder 201 (wirelessly or via a wired connection) and the wire feeder also does not have any user input capabilities, as described above regarding the power supply 101. In a traditional welding system the power supply 101 contains sufficient user input controls to allow a user to also control the operation of the wire feeder 201, for example the wire feed speed or wire direction. That is, the welding power supply 101 and the wire feeder 201 are coupled to each other such that any settings (such as wire feed speed) which is input via the user input controls on the power supply would be transmitted to the wire feeder and, vice versa, any inputs made on the wire feeder user input controls would be transmitted to the power source. However, in embodiments of the present invention, not only does the power supply not have any user input capability, but it has no means to directly communicate with the wire feeder 201. Rather, the mobile device controls the operation of the wire feeder 201 in a similar fashion to that of the power supply 101. The user inputs any relevant user input data into the mobile device 103 which is then communicated directly to the wire feeder 201 to control the operation of the wire feeder 201 (e.g., wire feed speed), and also communicated to the power supply 101 to control the power supply (such as current, voltage, power, etc.). The wire feeder 201 has no separate, dedicated user input ability on the wire feeder itself.

Figure 2 also depicts a welding imaging system 203 which can be used with exemplary embodiments of the present invention. Because the operation of the power supply can now be controlled remotely it may be desirable to visually monitor the welding operation on the device 103. Thus an imaging system 203, which can be any kind of imaging system (e.g., thermal, visual, etc.) can be located adjacent the welding or cutting operation which then transmits data to the device 103 for display.

Of course, embodiments of the present invention are not limited to using the mobile communication device to control only the power supply and wire feeder, as other components can be similarly controlled. For example, it is contemplated that systems which provide fume extraction or shielding gas can be similarly controlled, thus obviating the need for any of these components having any user input control as described above.

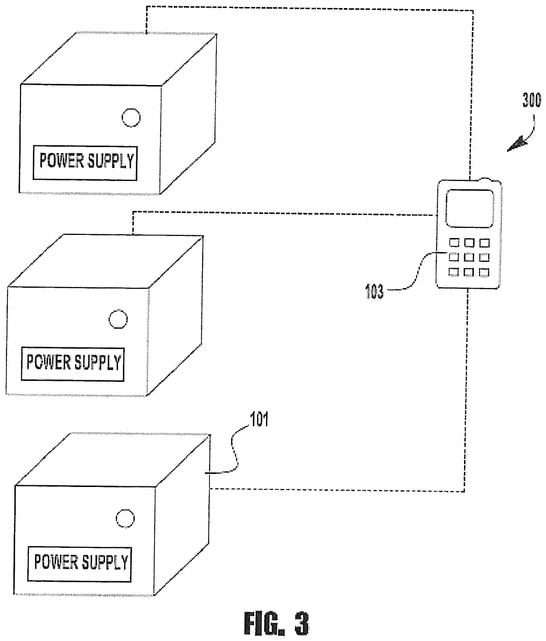

Figure 3 depicts another system 300 in which the mobile device 103 controls the operation of a plurality of power supplies 101. Thus, the user input data application in the mobile device 103 is capable of distinguishing between multiple power sources 101 and has the ability to transmit the appropriate operational data to each power supply in a group of power supplies. Thus, the application on the mobile device 103 has the capability to store power supply identification information and then use that information to control the operation of the proper power supply 101.

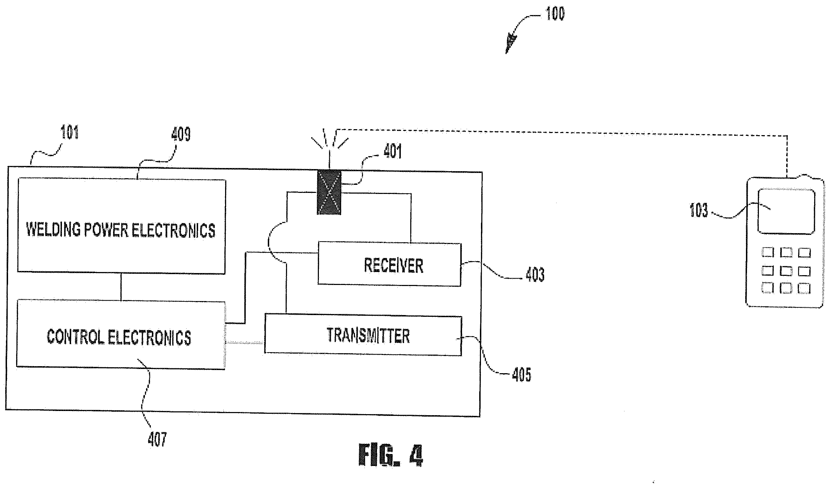

As shown in Figure 4, each device/power supply controlled by the device 103 has a receiver 403 and transmitter 405 so that it can communicate with the device 103. To the extent the power supply 101 has wireless communication ability the power supply has an antenna 401 which can facilitate the wireless communication. The antenna 401, receiver 403 and transmitter 405 can be any known type or design capable of receiving and transmitting data from the power supply 101 to the device 103 to facilitate control of the power supply 101. These components are known in various technology areas and need not be described in detail herein. Because the power supply 101 can generate very high power levels and output it will be necessary to ensure that the antenna 401, receiver 403 and transmitter 405 are appropriately shielded so that their operation is not compromised.

Each of the receiver 403 and transmitter 405 are coupled to the control electronics 407 of the power supply, which is in turn coupled to the power electronics 409. During operation the user input information is sent from the device 103 to the control electronics 407 such that the control electronics 407 can properly control the power electronics 409 so that the output of the power supply 101 is as desired. Similarly, any feedback information to be sent to the device 103 is sent by the transmitter 405.

The construction and operation of the control electronics and power electronics 409 are known to those of ordinary skill in the welding art, and need not be described in detail herein. A representative example of the construction of a welding power supply contemplated by embodiments of the present invention, including a discussion of the power and control electronics can be found in U.S. Patent Application No. 11/551,957 entitled "Three Stage Power Source for Electric Arc Welding," filed on October 23, 2006.

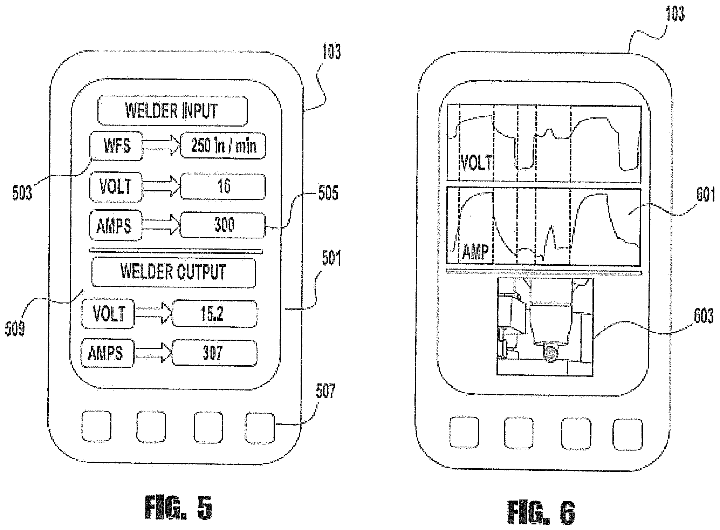

Figure 5 depicts a representative mobile communication device 103 capable of being used with embodiments of the present invention. The device 103 may contain some physical input controls 507 - although this is not necessary for all embodiments - and contain a display screen 501. Because the construction and operation of such mobile communication devices are known, they need not and will not be discussed in detail herein. As stated above, the device 103 contains an application which allows a user to input operational data to the device 103 to be transmitted to a power supply 101. In Figure 5, a user input screen is shown which allows a user to input variables such as: wire feed speed, voltage and current, each of which are shown with input data icons 503. Of course, embodiments of the present invention are not limited to these input variables as any variables can be used, for example travel speed, etc. Adjacent to each user input icon 503 is a user input data field 505 which displays the value input by the user. The data can be input by any known means of operating mobile devices, including but not limited to, touch screen, keypad, electronic pointer device, audio command, etc. Once the appropriate operation data is input into the device 103 it is sent to the power supply 101 which then uses the data to control a welding or cutting operation. No user input information is input via the power supply 101 itself.

Figure 5 also shows that the device 103 can display output data 509, which is feedback from the power supply 101. For example, in a welding operation, it may be desirable for the user to monitor some of the output of the power supply 101, including current and voltage. This data can be displayed on the screen 501. Of course, the feedback data is not limited to current and voltage, but can include any feedback parameters which the user wishes to monitor.

Figure 6 depicts the mobile device 103 showing additional information regarding the operation of the power supply, including output waveforms 601 and an image 603 from an imaging device 203. The depiction in Figures 5 and 6 are not intended to be limiting as the information can be displayed in many different ways. Embodiments of the present invention are not limited in this regard. In fact, the versatility in the capabilities and programming of mobile devices 103 greatly expands the manner in which welding or cutting operations can be controlled and monitored.

Of course, it is also contemplated that the mobile devices 103 have memory capacity which can store any relevant user input or feedback data regarding the operation of a power supply 101.

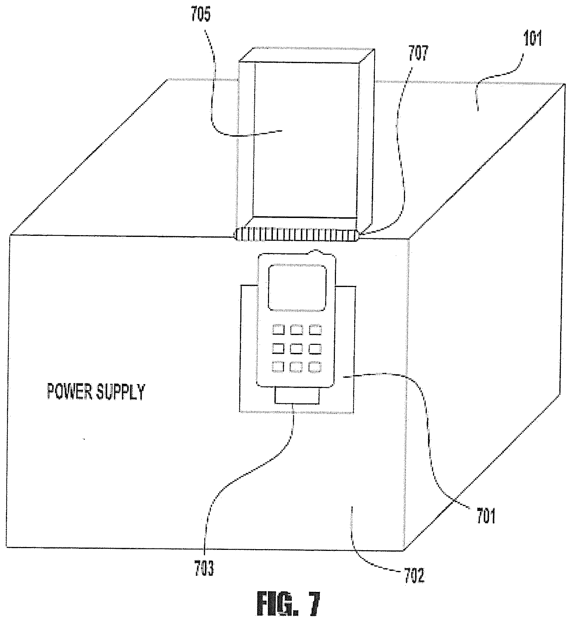

Figure 7 depicts another exemplary embodiment of the present invention. Specifically, the power supply 101 (whether welding or cutting) contains a mounting structure 701 which is capable of securing the mobile communication device 103 to the housing 702 of the power supply 101. In some situations or conditions it may not be necessary for the communication device to be positioned remotely from the power supply 101. Thus, the mounting structure 701 permits the communication device 103 to be removably secured to the housing 702 so that the device 103 can act as a user interface positioned physically on the power supply 101. The mounting structure 701 should be configured to sufficiently secure the device 103 to the housing 702 to prevent inadvertent disconnection of the device 103 from the housing 702, but should also permit the device 103 to be removable for remote operation. Also coupled to the housing 702, and perhaps made integral to the mounting structure 701 is a data connection device 703. The data connection device 703 is of a type that allows for the mobile communication device 103 to be docked with the power supply 101 such that data and communication between the mobile device 103 and the power 101 supply can be accomplished via a communication/data port on the mobile device 103. Such data connection devices include, but are not limited to, universal serial bus (USB), mini-USB, enhanced mini-USB, and other commercially available or proprietary data communication ports. Furthermore, the data communication port 703 can also allow for power transfer from the power supply 101 to the communication device 103 such that when docked a battery in the communication device 103 can be charged. Thus the port can allow for the transfer of data and power. During operation a user can "dock" the mobile communication device 103 in the mounting structure 701 to couple the device 103 to the port 703 and then use the mobile device 103 as a user input panel for the power supply 101. It should be noted that it is not necessary for the data communication port 703 to be located at or near the mounting structure 701. In fact, the port 703 can be located such that a cable or wired connection can be utilized between the mobile communication device 103 and the power supply 101.

In addition to the foregoing, embodiments of the present invention also provide operational security to the welding systems described herein. With a traditional power supply the user interface is on the power supply such that if the power supply is stolen it can be still be fully operated. Similarly, the power supply can be operated by unauthorized users or the power supply can have some of its operational settings changed without authorization. Embodiments of the present invention prevent this from occurring by employing security or identification keys which are stored in both the power supply and the mobile communication device such that only an authorized user can operate the power supply. For example, (referring to Figs. 1, 4) each of the communication device 103 and the power supply 101 have a security key stored in their respective memories. When an authorized user of the system 100 wishes to operate the power supply 101 and transmits operational parameters from the mobile device 103 the mobile device can communicate its security key. The power supply 101 validates this security key (e.g., by comparing it to its stored security key) and if the comparison is favorable the operation can proceed. Similarly, the power supply 101 can query the mobile device 103 for the proper security key to determine whether or not to accept instructions from the device 103. For example, once a communication connection is made (for example using a Blue Tooth communication protocol) the device 103 and/or power supply 101 can query each other to validate the respective security keys and begin operation. However, if an unauthorized user - who in fact may have a mobile device 103 with an appropriate welding or cutting application installed - wishes to operate the power supply 101 they will be unable to do so because the unauthorized user's mobile device will not have the appropriate security key. Moreover, because the power supply 101 does not have a user interface, the unauthorized user will be unable to manually operate the power supply. In exemplary embodiments of the present invention the security key validation by the power supply 101 can be accomplished in the control electronics 407 which possesses a memory and validation protocol for storing the appropriate validation or security key and carrying out the process of validating the mobile communication device 103 prior to operation.

In other exemplary embodiments, the above described mounting structure can be located on a wire feeder 201 or other component of the welding system 100/200/300. It is not necessary that the mounting structure be on the power supply 101.

In either of the above described embodiments, the mobile communication device 103 is still capable of communicating with other components wirelessly during welding. For example, if the mounting structure 701 is on the power supply 101, the communication device 103 can still communicate directly with a wire feeder 201. Of course, in other exemplary embodiments the power supply 101 can communicate with the wire feeder 201 (or other components) via either a wired or wireless connection to provide the necessary operational data from the mobile communication device 103 to respective component.

In another exemplary embodiment of the present invention, an environmental protection housing 705 is secured to the housing 702 of the power supply 101 which can be positioned to cover the mobile communication device 103 from environmental conditions. For example, the protective housing 705 can be made of a transparent plastic material and secured to the housing 701 via a hinge structure 707. This allows the protective housing 705 to be positioned over the mobile device 103 to protect it from damage, but allow the information to be seen. The protective housing 705 can be made from any number of materials which can provide sufficient environmental and/or structure protection. Although not shown, a locking structure can also be placed on the housing 701 and/or protective housing 705 to lock the protective housing 705 in a closed position.

By eliminating all user input hardware and software in the power supplies, wire feeders, and other systems used in welding and cutting operations, embodiments of the present invention provide significant cost reductions in the power supplies, while simplifying the operability of the systems. This simplification comes in part, through the ease at which custom applications can be created for mobile communication devices, as opposed to customizing specific power supplies.

### Cameleon User Interface

In one embodiment, the "look and feel" of a graphical user interface, provided by the welding or cutting programming application that is presented to a user on a display of the mobile communication device, can be switched between two or more selections. For example, when a user wants to input operational parameters needed to control a welding or cutting operation as described herein, the user can switch between a first type of graphical user interface that has the "look and feel" of welding or cutting equipment manufacturer "A", and a second type of graphical user interface that has the "look and feel" of welding or cutting manufacturer "B". For example, manufacturer A could be Lincoln Electric and manufacturer B could be a competitor of Lincoln Electric. In this manner, the user can select that "look and feel" with which he/she is more familiar and comfortable. For example, the graphical user interface type corresponding to manufacturer "A" may use one set of terminology and parameter selection ranges, and the graphical user interface type corresponding to manufacturer "B" may use another set of terminology and parameter selection ranges. In general, the welding or cutting programming application installed on the mobile communication device may provide more than two types of graphical user interfaces from which to select, in accordance with some embodiments.

In accordance with an alternative embodiment, the mobile communication device is configured to determine (e.g., via communication with a welding or cutting power source) the type of welding or cutting system and automatically select the graphical user interface for that welding or cutting system.

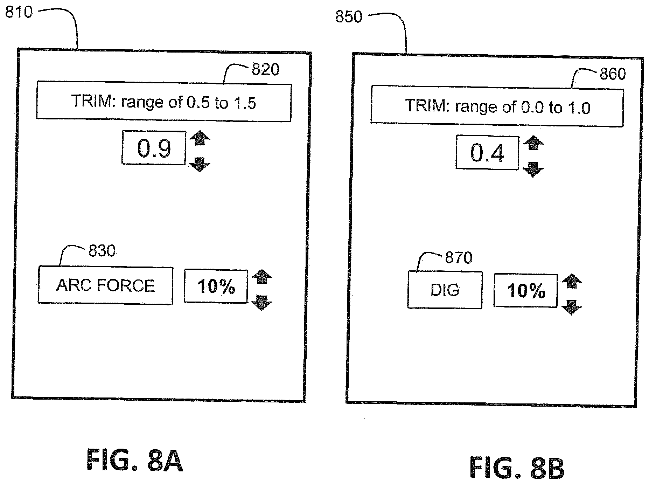

FIG. 8A illustrates an example embodiment of a first type of graphical user interface 810 corresponding to manufacturer "A", and FIG. 8B illustrates an example embodiment of a second type of graphical user interface 850 corresponding to manufacturer "B". FIG. 8A shows a TRIM parameter 820 which can be adjusted between values of 0.5 to 1.5. In FIG. 8A the TRIM is presently set to a value of 0.9. FIG. 8B shows a TRIM parameter 860 which can be adjusted between values of 0.0 to 1.0. In FIG. 8B the TRIM is presently set to a value of 0.4. However, for example, the welding system may be designed to accept TRIM values in the range of 0.5 to 1.5. Therefore, when the graphical user interface of FIG. 8B is used, the welding programming application converts the TRIM value entered by the user in the range of 0.0 to 1.0 to a corresponding TRIM value in the range of 0.5 to 1.5 before sending the TRIM value to the welding system. FIG. 8A also shows an ARC FORCE parameter 830 presently set at 10%. In FIG. 8B, the term DIG 870 is used instead or ARC FORCE, even though both terms refer to the same parameter. The DIG 870 in FIG. 8B is also presently set to 10%. In this manner, the "look and feel" of different types of graphical user interfaces are provided.

### User Interface Based on Image Processing and Augmented Reality (AR)

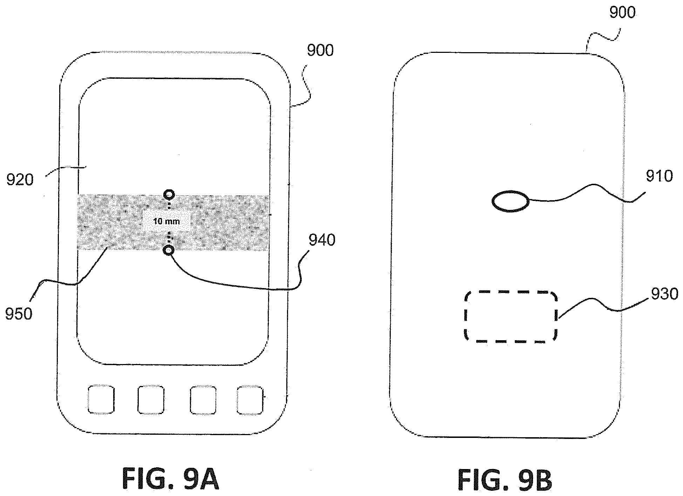

In one embodiment, the mobile communication device includes a camera and a display that can be used by the user to image, for example, various aspects of the work environment. The mobile communication device also includes a motion sensor device such as, for example, an accelerometer-based device, allowing a distance that the mobile communication device moves from one vantage point to another to be determined. Many off-the-shelf mobile communication devices (e.g., smartphones) include such a camera, a display, and a motion sensor device. FIG. 9A and FIG. 9B illustrate one embodiment of a mobile communication device 900 having a camera 910, a display 920, and a motion sensor device 930. FIG. 9A is a front view of the mobile communication device 900 and FIG. 9B is a rear view of the mobile communication device 900. Furthermore, a mobile communication device 900 can include a measurement programming application that takes advantage of the camera 910, the display 920, and the motion sensor device 930 and applies augmented reality (AR) techniques to allow a user to measure a distance (length) across two points on an object (measurement functionality). The measurement programming application overlays an augmented reality image 940 (e.g., a dashed line with end dots and a numerical measurement value) on the workpiece 950 (as seen on the display 920) as the user looks at real-time displayed imagery acquired by the camera to allow the user to make a measurement. Such a measurement programming application is known in the art (e.g., the Measure application on the iPhone^{®}). For example, in one embodiment, a user uses the measurement programming application by opening the measurement programming application, moving a displayed dot to a starting measuring point and tapping a select icon to select the starting measuring point, moving the displayed dot to an ending measuring point and tapping the select icon to select the ending measuring point. The measurement programming application will then calculate and display the measurement result (e.g. in inches or millimeters). FIG. 9A illustrates one embodiment of an overlaid augmented reality image 940 on a workpiece 950 displayed on a mobile communication device 900 which shows a measured thickness (10 mm) of the workpiece 950.

In accordance with one embodiment, a welding or cutting programming application on a mobile communication device (having a camera, a display, and a motion sensor device) incorporates such measurement functionality. As an example, a user can use the mobile communication device to measure a thickness distance of a material (workpiece) to be welded or cut. The thickness measurement is correlated to welding or cutting operational parameters used to control the welding or cutting operation in the welding or cutting programming application. That is, the correlated welding or cutting operational parameters have values that are appropriate for welding or cutting a material having that thickness. The mobile communication device then communicates the welding or cutting operational parameters to a welding or cutting power supply of a welding or cutting system to be used to weld or cut the material. Measurements of other distance or length parameters are possible as well, in accordance with other embodiments. Such other distance or length parameters may include, for example, a diameter of a welding consumable (e.g., a welding wire) or a width and/or depth of a welding groove between two workpieces to be welded together. Correlations of one or more measurements to welding or cutting operational parameters can be made, in accordance with various embodiments.

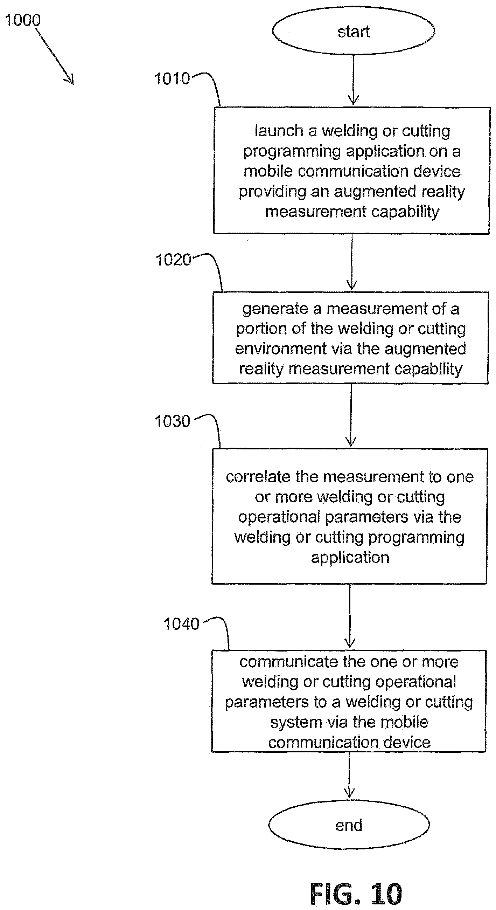

FIG. 10 illustrates a flowchart of an example not being part of the claimed invention of a method 1000 performed by a mobile communication device providing an augmented reality measurement capability to automatically select appropriate operational parameters for a welding or cutting operation. At block 1010, the mobile communication device launches a welding or cutting programming application, in response to a user action, providing an augmented reality measurement capability. At block 1020, the mobile communication device generates a measurement of a portion of the welding or cutting environment via the augmented reality measurement capability in response to user actions. At block 1030, the mobile communication device correlates the generated measurement to one or more welding or cutting operational parameters via the welding or cutting programming application. For example, in one embodiment, the correlation is accomplished by addressing a look-up-table, having the operational parameters, using the measurement as an address. At block 1040, the mobile communication device communicates the one or more welding or cutting operational parameters to a welding or cutting system (e.g., a power supply of a welding or cutting system). The welding or cutting system may then use the operational parameters to perform a welding or cutting operation.

In accordance with an alternative embodiment, the measurement functionality is not a part of the welding or cutting programming application but, instead, is a pre-existing, standalone measurement application (e.g., the Measure application on the iPhone^{®}). However, the welding or cutting programming application is configured to execute in cooperation with the measurement application to read the measurement that is made and output by the measurement application. Again, the welding or cutting programming application correlates the measurement to welding or cutting parameters, and the mobile communication device then communicates the correlated welding or cutting operational parameters to, for example, a welding or cutting power supply of a welding or cutting system to be used to weld or cut the material.

In accordance with another embodiment, the camera on the mobile communication device is used to acquire one or more images of the welding or cutting environment (e.g. workpiece, consumable, power supply, etc.) and the welding or cutting programming application is configured to analyze the acquired images to generate analysis results. The analysis results are then correlated to welding or cutting operational parameters used to control the welding or cutting operation in the welding or cutting programming application. That is, the correlated welding or cutting operational parameters have values that are appropriate for performing a welding or cutting operation for that welding or cutting environment. The mobile communication device then communicates the welding or cutting operational parameters to, for example, a welding or cutting power supply of the welding or cutting environment to perform the welding or cutting operation. In this manner, a "point and weld" or a "point and cut" capability is provided. The user simply points the camera of the mobile communication device and acquires the image(s) of the welding or cutting environment. The welding or cutting operational parameters are automatically determined and sent to the welding or cutting environment. In accordance with various embodiments, the analysis of the acquired image(s) may include, for example, performing image processing, determining relational distance measurements, determining angular measurements, determining the type of material to be welded or cut, and/or determining the type of welding or cutting equipment (e.g., power supply, wire feeder, consumable, etc.) in the welding or cutting environment.

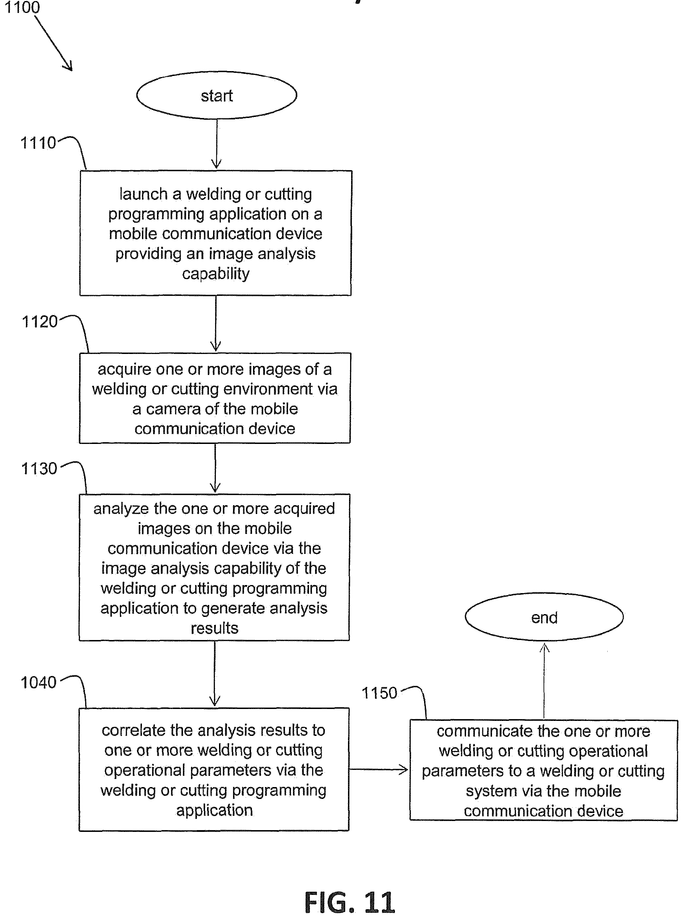

FIG. 11 illustrates a flowchart of an example not being part of the claimed invention of a method 1100 performed by a mobile communication device providing an image analysis capability to automatically select appropriate operational parameters for a welding or cutting operation. At block 1110, the mobile communication device launches a welding or cutting programming application, in response to a user action, providing an image analysis capability. At block 1120, the mobile communication device acquires one or more images of a welding or cutting environment via a camera of the mobile communication device in response to a user action. At block 1130, the one or more acquired images are analyzed on the mobile communication device via the image analysis capability of the welding or cutting programming application to generate analysis results. At block 1140, the mobile communication device correlates the analysis results to one or more welding or cutting operational parameters via the welding or cutting programming application. For example, in one embodiment, the correlation is accomplished by addressing a look-up-table, having the operational parameters, using the analysis results as an address. At block 1150, the mobile communication device communicates the one or more welding or cutting operational parameters to a welding or cutting system (e.g., a power supply of a welding or cutting system). The welding or cutting system may then use the operational parameters to perform a welding or cutting operation.

### Service/Maintenance Based on image Recognition and Augmented Reality (AR)

In one embodiment, the mobile communication device includes a camera, a display, and a motion sensor device that can be used by the user to image, for example, various aspects of the work environment to aid in maintaining/servicing welding or cutting equipment. In one embodiment, when maintenance/service is needed on a part of a welding or cutting system, a user can employ the camera, the display, and the motion sensor device of the mobile communication device. Real-time imagery of the part within the welding or cutting system can be acquired and displayed. A maintenance/service AR application is installed on the mobile communication device and is configured to recognize elements of the part in the imagery and overlay augmented information on the imagery of the part to guide the user in maintaining/servicing the part. Augmented information may be in the form of, for example, text, numbers, and graphics. Various types of known recognition or matching algorithms may be employed by the maintenance/service AR application to recognize the part and its elements.

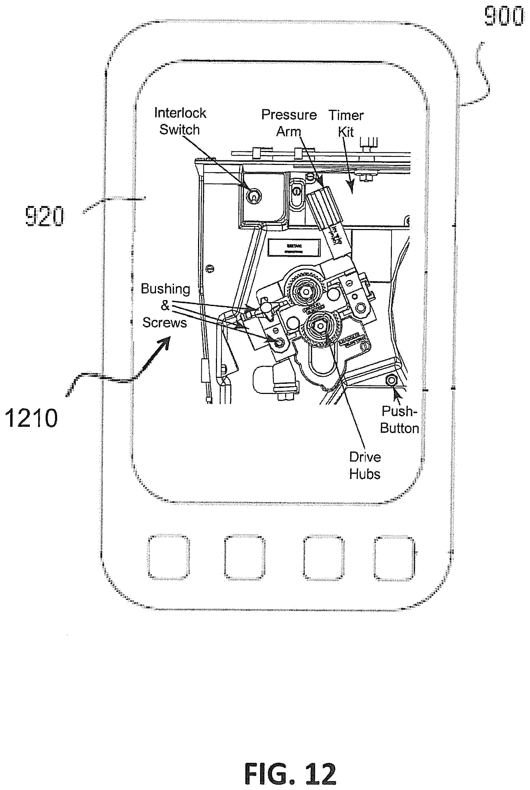

For example, in one embodiment, when maintenance/service is needed on the drive rolls of a wire feeder, a user can use the mobile communication device to image the real-world drive roll assembly within the wire feeder. The maintenance/service programming application recognizes the drive roll assembly and its elements and displays overlaid AR information to guide the user in replacing the drive rolls. For example, overlaid AR information may indicate (e.g., "point to") screws of the drive roll assembly that have to be removed. Also, other types of AR information can be overlaid on the imagery of the drive roll assembly to help in maintaining/servicing the wire feeder. FIG. 12 illustrates one embodiment of a mobile communication device 900 displaying real time imagery 1210 including overlaid augmented reality elements. The imagery 1210 includes imagery of a real drive roll assembly being imaged with a camera 910 of the mobile communication device 900 and displayed on the display 920 of the mobile communication device 900. The imagery 1210 also includes augmented reality text and arrows overlaid on the real drive roll assembly portion of the imagery 1210. The augmented reality text and arrows indicate the locations of an interlock switch, a pressure arm, a timer kit, a bushing and screws, drive hubs, and a push-button on the drive roll assembly. In this manner, such augmented reality elements can aid maintenance/service personnel in replacing the drive roll assembly, for example. As a user moves the mobile communication device 900 with respect to the real-world drive roll assembly, the imagery 1210 (including the overlaid AR information) is updated on the display 920 in real time to reflect the new positioning of the mobile communication device 900 (and its camera 910) with respect to the drive roll assembly.

In one embodiment, a series of overlaid AR information can be provided to the user in a step-wise manner, guiding the user through a series of steps to replace the drive rolls, for example. After completing a step in the series, the user may simply select the next step, allowing the next overlaid AR information for that next step to be displayed with respect to the drive roll assembly in an AR manner. Replacing the drive rolls of a drive roll assembly of a wire feeder is just one example. Embodiments of the present invention can be applied to many different types of parts to be maintained or serviced in a welding or cutting environment.

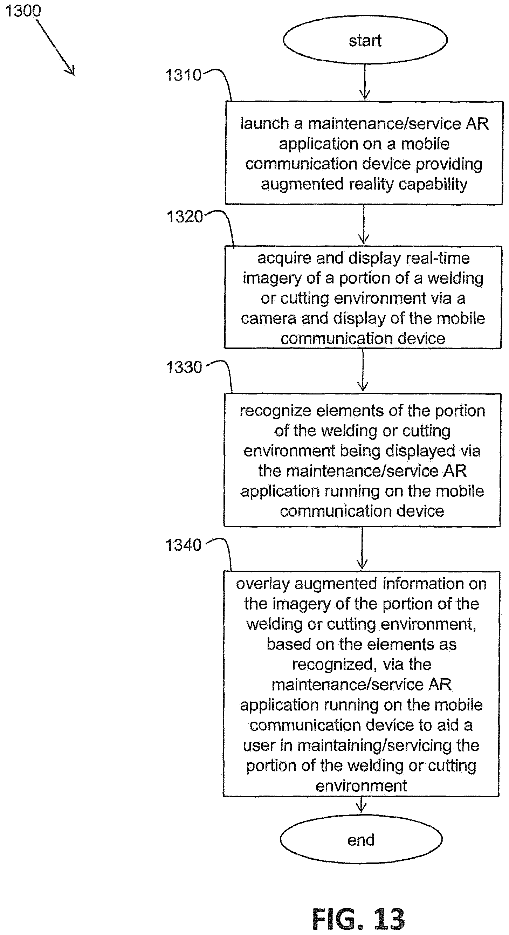

FIG. 13 illustrates a flowchart of an example not being part of the claimed invention of a method 1300 to support maintenance/service of welding or cutting equipment of a welding or cutting environment using a mobile communication device. At block 1310, the mobile communication device launches a maintenance/service application, in response to a user action, providing recognition and augmented reality capability. At block 1320, the mobile communication device acquires and displays real-time imagery of a portion of the welding or cutting environment (e.g., a drive roll assembly of a wire feeder) via a camera and display of the mobile communication device while the maintenance/service AR application is running. At block 1330, the maintenance/service AR application running on the mobile communication device recognizes elements of the portion of the welding or cutting environment being displayed. Various types of known recognition or matching algorithms may be employed by the maintenance/service AR application to recognize the elements of the portion of the welding or cutting environment. For example, the real-time imagery may be compared to images of known welding or cutting equipment stored in a memory or database on the mobile communication device 900 or on an external device (e.g., a server computer having a database) which the mobile communication device can access. At block 1340, augmented reality information (e.g., text and arrows) is overlaid on the imagery of the portion of the welding or cutting environment, in an AR manner, via the maintenance/service application running on the mobile communication device. This aids the user in maintaining/servicing the portion of the welding or cutting environment.

### REFERENCE NUMERALS

| | | | |
|---|---|---|---|
| 100 | welding system | 850 | user interface |
| 101 | power supply | 860 | parameter |
| 103 | mobile communication device | 870 | DIG |
| 105 | wired connection | 900 | mobile communication device |
| 107 | switch | 910 | camera |
| 200 | welding system | 920 | display |
| 201 | wire feeder | 930 | motion sensor device |
| 203 | system | 940 | augmented reality image |
| 300 | system | 950 | workpiece |
| 401 | antenna | 1000 | method |
| 403 | receiver | 1010 | block |
| 405 | transmitter | 1020 | block |
| 407 | control electronic | 1030 | block |
| 409 | power electronic | 1040 | block |
| 501 | display | 1100 | method |
| 503 | input data icon | 1110 | block |
| 505 | input data field | 1120 | block |
| 507 | input controls | 1130 | block |
| 509 | output data | 1140 | block |
| 601 | output waveform | 1150 | block |
| 603 | image | 1210 | imagery |
| 701 | mounting structure | 1300 | method |
| 702 | housing | 1310 | block |
| 703 | data connection device | 1320 | block |
| 705 | protective housing | 1330 | block |
| 707 | hinge structure | 1340 | block |
| 810 | user interface | | |
| 820 | parameter | W | workpiece |
| 830 | parameter | | |

## Claims

1. A welding or cutting system, comprising:
a welding or cutting power supply (101) to respectively perform welding or cutting operations; and **characterized by**
a mobile communication device (103) having a camera (910), a display (920), and a motion sensor device (930), wherein the mobile communication device (103) includes a mobile communication programming application and a welding or cutting programming application installed thereon, wherein the welding or cutting programming application programmed to:
generate displayed imagery of an object of a welding or cutting environment and make a measurement of the object, using the camera (910) and the display (920) and the motion sensor device (930), at least in part by overlaying augmented reality imagery onto the displayed imagery of the object as a user positions the mobile communication device with respect to the object,
correlate the measurement to one or more welding or cutting operational parameters, and
facilitate communication of the one or more welding or cutting operational parameters from the mobile communication device (103) to the welding or cutting power supply (101), wherein the one or more welding or cutting operational parameters are for use by the welding or cutting power supply to control a welding or cutting operation of the welding or cutting operations.

2. The welding or cutting system (100) of claim 1, wherein the welding or cutting programming application is further programmed to:
acquire one or more images of a welding or cutting environment via the camera,
analyze the one or more images to generate analysis results, and
correlate the analysis results to one or more welding or cutting operational parameters, wherein an analysis of the one or more aquired images includes one or more of performing image processing, determining relational distance measurements, determining angular measurements, determining a type of material to be welded or cut in the welding or cutting environment, and determining a type of welding or cutting equipment present in the welding or cutting environment.

3. The welding or cutting system of claim 1 or 2, wherein the mobile communication device (103) includes a maintenance/service augmented reality application installed thereon, wherein the maintenance/service augmented reality application programmed to:
acquire and display real-time imagery of a portion of a welding or cutting environment via the camera (910) and display (920) of the mobile communication device (103),
recognize elements of the portion of the welding or cutting environment being displayed, and
overlay augmented information on the real-time imagery of the portion of the welding or cutting environment, based on the elements as recognized, to aid a user in maintaining or servicing the portion of the welding or cutting environment.

4. The welding or cutting system of claim 3, wherein the augmented information includes at least one of computer generated text, numbers, or graphics.

5. The welding or cutting system of one of the claims 1 to 4, wherein the mobile communication device (103) is a third party communication device.

6. The welding or cutting system of one of the claims 1 to 5, wherein the mobile communication device (103) includes one of a smartphone, a computer tablet, or a computer laptop.

7. The welding or cutting system of one of the claims 1 to 6, wherein the object is a workpiece to be welded or cut and the measurement corresponds to a thickness of the workpiece (950, W).

8. The welding or cutting system of one of the claims 1 to 7, wherein the object is a consumable welding wire and the measurement corresponds to a diameter of the consumable welding wire.

9. The welding or cutting system of one of the claims 1 to 8, wherein the object is a welding groove between two workpieces (950, W) to be welded together and the measurement corresponds to a width or depth of the welding groove.

10. The welding or cutting system of one of the claims 1 to 9, wherein the mobile communication device (103) has a security key which is transmitted to the welding or cutting power supply (101) prior to operation of the welding or cutting power supply (101), and wherein the welding or cutting power supply (101) will not operate unless the security key is determined to be an authorized security key by the welding or cutting power supply (101).

11. The welding or cutting system of one of the claims 1 to 10, wherein the mobile communication device (103) operates the welding or cutting power supply (101) from a remote location via awireless connection.

12. The welding or cutting system of one of the claims 1 to 11, wherein the mobile communication device (103) stores identification information of the welding or cutting power supply (101) and uses the identification information to control the operation of the welding or cutting power supply (101).

## Patentansprüche

1. Schweiß- oder Schneidsystem, das umfasst:
eine Schweiß- oder Schneidstromversorgung (101) zum Durchführen von Schweiß- bzw. Schneidoperationen; und **gekennzeichnet durch**
eine Mobilkommunikationsvorrichtung (103), die eine Kamera (910), ein Display (920) und eine Bewegungssensorvorrichtung (930) aufweist, wobei die Mobilkommunikationsvorrichtung (103) eine Mobilkommunikationsprogrammieranwendung und eine darauf installierte Schweiß- oder Schneidprogrammieranwendung enthält, wobei die Schweiß- oder Schneidprogrammieranwendung programmiert ist zum:
Generieren angezeigter Bilder eines Objekts einer Schweiß- oder Schneidumgebung und Vornehmen einer Messung des Objekts unter Verwendung der Kamera (910) und des Displays (920) und der Bewegungssensorvorrichtung (930) mindestens teilweise durch Legen von Augmented-Reality-Bildern über die angezeigten Bilder des Objekts, wenn ein Benutzer die Mobilkommunikationsvorrichtung in Bezug auf das Objekt positioniert,
Korrelieren der Messung mit einem oder mehreren Schweiß- oder Schneidbetriebsparametern, und
Ermöglichen einer Übermittlung des einen oder der mehreren Schweiß- oder Schneidbetriebsparameter von der Mobilkommunikationsvorrichtung (103) zu der Schweiß- oder Schneidstromversorgung (101), wobei der eine oder die mehreren Schweiß- oder Schneidbetriebsparameter für die Verwendung durch die Schweiß- oder Schneidstromversorgung zum Steuern einer Schweiß- oder Schneidoperation der Schweiß- oder Schneidoperationen gedacht sind.

2. Schweiß- oder Schneidsystem (100) nach Anspruch 1, wobei die Schweiß- oder Schneidprogrammieranwendung des Weiteren programmiert ist zum:
Aufnehmen eines oder mehrerer Bilder einer Schweiß- oder Schneidumgebung über die Kamera,
Analysieren des einen oder der mehreren Bilder, um Analyseergebnisse zu generieren, und
Korrelieren der Analyseergebnisse mit einem oder mehreren Schweiß- oder Schneidbetriebsparametern, wobei eine Analyse des einen oder der mehreren aufgenommenen Bilder eines oder mehrere von Folgendem umfasst: Durchführen einer Bildverarbeitung, Bestimmen von relationalen Distanzmessungen, Bestimmen von Winkelmessungen, Bestimmen eines Typs eines Materials, das in der Schweiß- oder Schneidumgebung geschweißt oder geschnitten werden soll, und Bestimmen eines Typs von Schweiß- oder Schneidausrüstung, die in der Schweiß- oder Schneidumgebung vorhanden ist.

3. Schweiß- oder Schneidsystem nach Anspruch 1 oder 2, wobei auf der Mobilkommunikationsvorrichtung (103) eine Wartungs-/Service-Augmented-Reality-Anwendung installiert ist, wobei die Wartungs-/Service-Augmented-Reality-Anwendung programmiert ist zum:
Aufnehmen und Anzeigen von Echtzeitbildern eines Abschnitts einer Schweiß- oder Schneidumgebung über die Kamera (910) und das Display (920) der Mobilkommunikationsvorrichtung (103),
Erkennen von Elementen des angezeigten Abschnitts der Schweiß- oder Schneidumgebung, und
Legen von augmentierten Informationen über die Echtzeitbilder des Abschnitts der Schweiß- oder Schneidumgebung auf der Grundlage der erkannten Elemente, um einen Benutzer bei Wartung oder Service des Abschnitts der Schweiß- oder Schneidumgebung zu unterstützen.

4. Schweiß- oder Schneidsystem nach Anspruch 3, wobei die augmentierten Informationen mindestens eines von computergeneriertem Text, computergenerierten Zahlen oder computergenerierten Grafiken enthalten.

5. Schweiß- oder Schneidsystem nach einem der Ansprüche 1 bis 4, wobei die Mobilkommunikationsvorrichtung (103) eine Kommunikationsvorrichtung eines Fremdanbieters ist.

6. Schweiß- oder Schneidsystem nach einem der Ansprüche 1 bis 5, wobei die Mobilkommunikationsvorrichtung (103) eines von einem Smartphone, einem Tablet-Computer und einem Laptop-Computer umfasst.

7. Schweiß- oder Schneidsystem nach einem der Ansprüche 1 bis 6, wobei das Objekt ein zu schweißendes oder zu schneidendes Werkstück ist und die Messung einer Dicke des Werkstücks (950, W) entspricht.

8. Schweiß- oder Schneidsystem nach einem der Ansprüche 1 bis 7, wobei das Objekt ein abschmelzender Schweißdraht ist und die Messung einem Durchmesser des abschmelzenden Schweißdrahtes entspricht.

9. Schweiß- oder Schneidsystem nach einem der Ansprüche 1 bis 8, wobei das Objekt eine Schweißfuge zwischen zwei miteinander zu verschweißenden Werkstücken (950, W) ist und die Messung einer Breite oder Tiefe der Schweißfuge entspricht.

10. Schweiß- oder Schneidsystem nach einem der Ansprüche 1 bis 9, wobei die Mobilkommunikationsvorrichtung (103) einen Sicherheitsschlüssel aufweist, der vor dem Betrieb der Schweiß- oder Schneidstromversorgung (101) an die Schweiß- oder Schneidstromversorgung (101) gesendet wird, und wobei die Schweiß- oder Schneidstromversorgung (101) erst dann betrieben werden kann, wenn durch die Schweiß- oder Schneidstromversorgung (101) bestimmt wird, dass der Sicherheitsschlüssel ein autorisierter Sicherheitsschlüssel ist.

11. Schweiß- oder Schneidsystem nach einem der Ansprüche 1 bis 10, wobei die Mobilkommunikationsvorrichtung (103) die Schweiß- oder Schneidstromversorgung (101) von einem räumlich abgesetzten Standort aus über eine drahtlose Verbindung bedient.

12. Schweiß- oder Schneidsystem nach einem der Ansprüche 1 bis 11, wobei die Mobilkommunikationsvorrichtung (103) Identifikationsinformationen der Schweiß- oder Schneidstromversorgung (101) speichert und die Identifikationsinformationen zum Steuern des Betriebes der Schweiß- oder Schneidstromversorgung (101) verwendet.

## Revendications

1. Système de soudage ou de coupe, comprenant :
une alimentation électrique de soudage ou de coupe (101) pour réaliser respectivement des opérations de soudage ou de coupe ; et **caractérisé par**
un dispositif de communication mobile (103) comportant une caméra (910), un affichage (920) et un dispositif détecteur de mouvement (930), dans lequel le dispositif de communication mobile (103) inclut une application de programmation de communication mobile et une application de programmation de soudage ou de coupe installées sur celui-ci, dans lequel l'application de programmation de soudage ou de coupe est programmée pour :
générer une imagerie affichée d'un objet d'un environnement de soudage ou de coupe et réaliser une mesure de l'objet, en utilisant la caméra (910) et l'affichage (920) et le dispositif détecteur de mouvement (930), au moins en partie par la superposition d'une imagerie de réalité augmentée sur l'imagerie affichée de l'objet au fur et à mesure qu'un utilisateur positionne le dispositif de communication mobile par rapport à l'objet,
corréler la mesure avec un ou plusieurs paramètres opérationnels de soudage ou de coupe, et
faciliter une communication des un ou plusieurs paramètres opérationnels de soudage ou de coupe du dispositif de communication mobile (103) à l'alimentation électrique de soudage ou de coupe (101), dans lequel les un ou plusieurs paramètres opérationnels de soudage ou de coupe sont destinés à être utilisés par l'alimentation électrique de soudage ou de coupe pour commander une opération de soudage ou de coupe parmi les opérations de soudage ou de coupe.

2. Système de soudage ou de coupe (100) selon la revendication 1, dans lequel l'application de programmation de soudage ou de coupe est en outre programmée pour :
acquérir une ou plusieurs images d'un environnement de soudage ou de coupe via la caméra,
analyser les une ou plusieurs images pour générer des résultats d'analyse, et
corréler les résultats d'analyse avec un ou plusieurs paramètres opérationnels de soudage ou de coupe, dans lequel une analyse des une ou plusieurs images acquises inclut un ou plusieurs parmi la réalisation d'un traitement d'images, la détermination de mesures de distances relationnelles, la détermination de mesures angulaires, la détermination d'un type de matériau à souder ou couper dans l'environnement de soudage ou de coupe, et la détermination d'un type d'équipement de soudage ou de coupe présent dans l'environnement de soudage ou de coupe.

3. Système de soudage ou de coupe selon la revendication 1 ou 2, dans lequel le dispositif de communication mobile (103) inclut une application de réalité augmentée de maintenance/service installée sur celui-ci, dans lequel l'application de réalité augmentée de maintenance/service est programmée pour :
acquérir et afficher une imagerie en temps réel d'une partie d'un environnement de soudage ou de coupe via la caméra (910) et l'affichage (920) du dispositif de communication mobile (103),
reconnaître des éléments de la partie de l'environnement de soudage ou de coupe qui est affichée, et
superposer des informations augmentées sur l'imagerie en temps réel de la partie de l'environnement de soudage ou de coupe, sur la base des éléments reconnus, pour aider un utilisateur dans le cadre de la maintenance ou du service de la partie de l'environnement de soudage ou de coupe.

4. Système de soudage ou de coupe selon la revendication 3, dans lequel les informations augmentées incluent au moins l'un parmi un texte, des valeurs numériques ou des graphiques générés par ordinateur.

5. Système de soudage ou de coupe selon l'une des revendications 1 à 4, dans lequel le dispositif de communication mobile (103) est un dispositif de communication tiers.

6. Système de soudage ou de coupe selon l'une des revendications 1 à 5, dans lequel le dispositif de communication mobile (103) inclut l'un parmi un smartphone, une tablette ou un ordinateur portable.

7. Système de soudage ou de coupe selon l'une des revendications 1 à 6, dans lequel l'objet est une pièce d'ouvrage à souder ou couper et la mesure correspond à une épaisseur de la pièce d'ouvrage (950, W).

8. Système de soudage ou de coupe selon l'une des revendications 1 à 7, dans lequel l'objet est un fil de soudage consommable et la mesure correspond à un diamètre du fil de soudage consommable.

9. Système de soudage ou de coupe selon l'une des revendications 1 à 8, dans lequel l'objet est une rainure de soudage entre deux pièces d'ouvrage (950, W) à souder l'une avec l'autre et la mesure correspond à une largeur ou une profondeur de la rainure de soudage.

10. Système de soudage ou de coupe selon l'une des revendications 1 à 9, dans lequel le dispositif de communication mobile (103) comporte une clé de sécurité qui est transmise à l'alimentation électrique de soudage ou de coupe (101) avant un fonctionnement de l'alimentation électrique de soudage ou de coupe (101), et dans lequel l'alimentation électrique de soudage ou de coupe (101) ne fonctionne pas à moins qu'il ne soit déterminé que la clé de sécurité est une clé de sécurité autorisée par l'alimentation électrique de soudage ou de coupe (101).

11. Système de soudage ou de coupe selon l'une des revendications 1 à 10, dans lequel le dispositif de communication mobile (103) fait fonctionner l'alimentation électrique de soudage ou de coupe (101) depuis un emplacement distant via une connexion sans fil.

12. Système de soudage ou de coupe selon l'une des revendications 1 à 11, dans lequel le dispositif de communication mobile (103) stocke des informations d'identification de l'alimentation électrique de soudage ou de coupe (101) et utilise les informations d'identification pour commander le fonctionnement de l'alimentation électrique de soudage ou de coupe (101).
